# EUROPEAN PATENT APPLICATION

(11) **EP 2 587 306 A1**
(43) Date of publication of application: **01.05.2013**
(21) Application number: 11800541.2
(22) Date of filing: 24.05.2011
(51) Int. Cl.: G02F 1/1368, G02F 1/1335, G09F 9/30

(54) **DISPLAY PANEL AND DISPLAY DEVICE**

(30) Priority: 28.06.2010 JP 2010146826
(71) Applicant: Sharp Kabushiki Kaisha, Osaka-shi, Osaka 545-8522 (JP)
(72) Inventor: HISADA, Yuhko, Osaka-shi, Osaka 545-8522 (JP); SAWADA, Hironobu, Osaka-shi, Osaka 545-8522 (JP); MORINAGA, Junichi, Osaka-shi, Osaka 545-8522 (JP); ASADA, Katsushige, Osaka-shi, Osaka 545-8522 (JP)
(74) Representative: Müller - Hoffmann & Partner
(86) International application number: PCT/JP2011/061901
(87) International publication number: WO 2012/002072

(57) **Abstract**

The present invention is to provide a display panel and a display device in each of which the white luminance and/or the color reproduction range are/is sufficiently improved by changing the sub-pixel area for each color, so that unevenness of luminance is sufficiently suppressed, and the influence of line width variation on the aperture ratio is reduced. The display panel according to the present invention includes a pair of substrates, a display element sandwiched between the pair of substrates, and pixels each formed by sub-pixels of four or more colors, and is featured in that one of the pair of substrates includes scanning lines, signal lines, and sub-pixel electrodes, and in that the area of at least one of the sub-pixels of four or more colors is different from the area of the other sub-pixels, and the sub-pixel having the larger area overlaps with a plurality of the signal lines in plan view of the main surface of the display panel.

## Description

### TECHNICAL FIELD

The present invention relates to a display panel and a display device. More particularly, the present invention relates to a display technique using multiple primary colors in a display panel, and particularly relates to a display panel and a display device which are able to exhibit display characteristics, such as high luminance, and wide color reproduction range, by means of pixels each configured by using four or more multiple primary colors, and which are able to adapt to various display modes, such as a CPA (Continuous Pinwheel Alignment) mode, an MVA (Multi-domain Vertical Alignment) mode, and an IPS (In-Plane-Switching) mode.

### BACKGROUND ART

In a display panel, one pixel is generally configured by.including color units of basic three primary colors consisting of red (R), blue (B) and green (G), or by including color units of more than three colors. Display panels based on various systems have been put into practical use, and many products ranging from mobile display panels to large-sized display panels have been supplied. Among the display panels, liquid crystal display panels, each of which is configured by sandwiching a liquid crystal display element between a pair of glass substrates, and the like, have features, such as thin profile, light weight, and low power consumption. Because of such features, liquid crystal display panels have been used for mobile applications, and applications such as various monitors and televisions, and hence have become indispensable in everyday life and business. In recent years, liquid crystal display panels have been widely adopted for such applications as electronic books, photo frames, IAs (industrial apparatuses), and PCs (personal computers). In these applications, mobile display panels, which are to be incorporated in small and medium-sized models and which have high definition and high transmittance characteristics, have been strongly required.

As for such display panel, there have been reported techniques relating to display devices (mainly TV models, and the like) in which pixel areas are changed for respective colors for improvement of white luminance, and the like, and in which pixels, such as RGBY pixels, each having four or more multiple primary colors, are used (see, for example, Patent Literatures 1 to 5).

Further, there is disclosed an active element substrate in which a plurality of signal lines, and a plurality of scanning lines intersecting the plurality of signal lines are formed, in which an active element and a pixel electrode are arranged on each of the intersecting portions of the signal lines and the scanning lines, and in which the pixel electrode is arranged to overlap with at least the signal line, the active element substrate being configured such that each of the signal lines respectively corresponding to a pair of the pixel electrodes adjacent to each other in the direction of the scanning line is collectively arranged on one of the pair of pixel electrodes and on the inner side from the edge of the one of the pair of pixel electrodes (see, for example, Patent Literature 6).
Further, there is disclosed a thin film transistor display panel including a plurality of gate lines formed on an insulating substrate, a gate insulator covering the gate lines, a plurality of semiconductors formed on the gate insulator, a plurality of data lines formed on the gate insulator so as to intersect the gate lines, a drain electrode formed on the gate insulator so as to be separated from the data line and to extend along the data line, a conductive body connected to the drain electrode and overlapping with the gate line of a preceding stage, a protective film covering the data line and the drain electrode, and a pixel electrode electrically connected with the drain electrode through a first contact hole of the protective film, and arranged in a pixel region surrounded by the gate line and the data line, the thin film transistor display panel being configured such that the data line completely overlaps with one of the pixel electrodes arranged in the pixel regions adjacent each other (see, for example, Patent Literature 7).

### CITATION LIST

### - Patent Literature

Patent Literature 1: International Publication No. WO 2007/063620 pamphlet
Patent Literature 2: International Publication No. WO 2007/088656 pamphlet
Patent Literature 3: JP 2008-015070 A
Patent Literature 4: International Publication No. WO 2008/153003 pamphlet
Patent Literature 5: International Publication No. WO 2007/013210 pamphlet
Patent Literature 6: JP 2005-99733 A
Patent Literature 7: JP 2005-173613 A

### SUMMARY OF INVENTION

### - Technical Problem

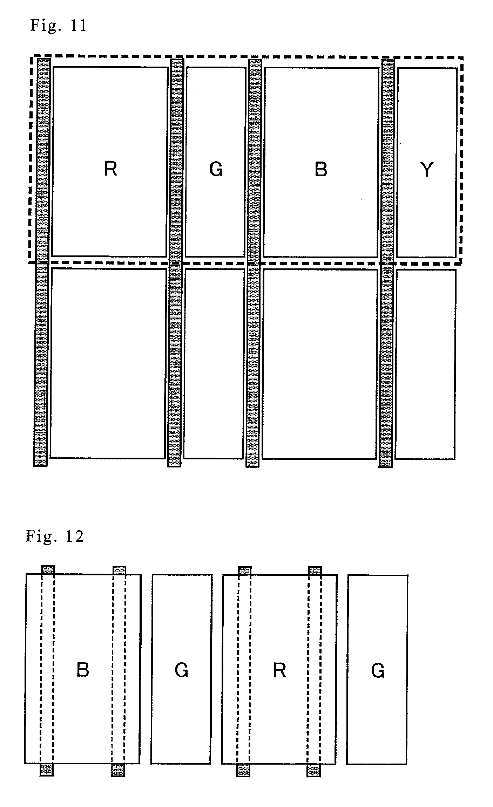

In the conventionally designed display panels described in Patent Literatures 1 to 5 described above, a display panel, which satisfies the requirements for both high luminance and wide color reproduction range, can be obtained in such a manner that a liquid crystal panel for RGB three colors, and the like, is made to correspond to multiple primary colors, such as four primary colors of RGBW (W: white) and four primary colors of RGBY (Y: yellow), that the aperture ratio (display area) is changed for each of the colors (Fig. 11), and that preferably, the area of each of the colors (R, B) having a low luminosity factor is relatively increased so as to avoid a decrease in the luminance of each of the colors (R, B) as much as possible (to make the decrease in the luminance hardly visually recognized) and so as to improve the white luminance. However, when such conventionally designed display panel is made to correspond to multiple primary colors, and especially when a high definition panel is made to correspond to multiple primary colors, the influence of occurrence of variation in finishing, such as local misalignment and/or pattern line width variation, in a manufacturing process is increased. As a result, unevenness of luminance, such as the so-called block separation, is visually recognized.

As the causes of this problem, the following are considered. In the case of a high-definition panel having small sub-pixels (picture elements), when the panel is made to correspond to four or more multiple primary colors, and when the aperture ratio is changed for each of the colors, the area of the small sub-pixels is significantly reduced, and thereby the total capacitance is significantly reduced. On the other hand, the capacitance (Csd) between a sub-pixel electrode and a signal line (source bus line) is almost constant, and hence the capacitance variation (ΔCsd) at the time of occurrence of local misalignment is also constant. Therefore, the ratio of the capacitance variation with respect to the total capacitance is increased as compared with the case of a panel of three colors of RGB.

Further, when the sub-pixels, such as G, Y and W, having a comparatively high luminosity factor are formed as the small sub-pixels, it is possible to obtain a panel having high luminance and high color reproducibility. However, in this case, the sub-pixels having the large capacitance variation ratio become the sub-pixels having the relatively high luminosity factor, and hence unevenness of luminance is more easily visually recognized. That is, the sub-pixel capacitance of the small sub-pixel is small, and hence is easily influenced by the variation in Csd. Further, the luminosity factor of the small sub-pixel is high, and hence the influence of the luminance variation resulting from the variation in Csd is remarkably visually recognized.

Further, in the active element substrate described in Patent Literature 6 described above, the signal lines of the sub-pixels adjacent to each other are collectively arranged on one of the sub-pixel electrodes and on the inner side of the edge of the one of the sub-pixel electrodes. However, the active element substrate is configured such that the total areas of the respective colors are equal to each other (Fig. 12), and does not originally have the above-described problem resulting from that the sub-pixel capacitance is different for each of the colors.
Further, the thin film transistor display panel disclosed in Patent Literature 7 described above needs to be improved to sufficiently solve the above-described problem.

The present invention, which has been made in view of the above-described circumstances, can suppress the unevenness of luminance and can be applied to various display modes, such as a CPA mode, an MVA mode, and an IPS mode. Further, the present invention, which has been made in view of the above-described circumstances, has an object to provide a display panel and a display device, in each of which white luminance and/or color reproduction range are/is sufficiently improved by changing the sub-pixel area for each color, so that the unevenness of luminance is sufficiently suppressed, and the influence of line width variation on the aperture ratio is reduced.

### - Solution to Problem

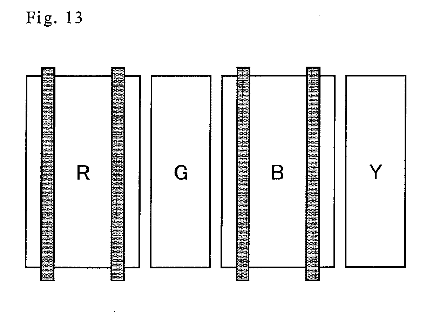

The present inventors have investigated various display panels and display devices in which unevenness of luminance is sufficiently suppressed, and paid attention to a method in which, in a display panel and a display device that use four or more multiple primary colors and have the aperture ratio changed for each color, the capacitance variation ratio with respect to the total capacitance at the time of occurrence of local misalignment and/or variation in finishing, such as a pattern line width variation, is suppressed to be small and/or the influence of the capacitance variation on the luminance is suppressed to be small. Then, the present inventors found out that, in a sub-pixel having small total capacitance (having a large capacitance variation ratio) and/or in a sub-pixel having higher brightness, when the capacitance (Csd) between the sub-pixel electrode and the signal line is selectively reduced, unevenness of luminance can be sufficiently prevented, and the influence of line width variation on the aperture ratio can be reduced, and that, when a sub-pixel having a larger area and/or a sub-pixel having lower brightness overlaps with a plurality of signal lines in plan view of the main surface of the display panel (see, for example, Fig. 13), the above-described effects can be exhibited. As a result, the present inventors came up with an idea that, with such configuration, the above described problems can be effectively solved, and reached the present invention.

That is, the present invention is to provide a display panel (also referred to as the first present invention) including a pair of substrates, a display element sandwiched between the pair of substrates, and pixels each formed by sub-pixels of a four or more colors, the display panel being featured in that one of the pair of substrates includes scanning lines, signal lines, and sub-pixel electrodes, in that the area of at least one of the sub-pixels of four or more colors is different from the area of the other sub-pixels, and in that the sub-pixel having the larger area overlaps with a plurality of the signal lines in plan view of the main surface of the display panel. With such form, in the sub-pixel having the smaller area (in the sub-pixel having small sub-pixel capacitance), the occurrence of unevenness of luminance due to capacitance variation can be sufficiently prevented. Further, in the case where a minute line width variation of the signal line is caused in a manufacturing process, when the signal line is arranged on the sub-pixel having the larger area, it is possible to reduce the influence of the line width variation on the aperture ratio.

That a pixel is configured by sub-pixels of four or more colors means that sub-pixels of four or more colors are arranged side by side on the panel surface so as to serve as one pixel for display. The array form of the sub-pixels of four or more colors may be a stripe-shape, a two-by-two matrix-shape, and a form of an array, such as a delta array, in which the sub-pixels are shifted in the column direction.

That the area of at least one of the sub-pixels of four or more colors is different from the area of the other sub-pixels means that the sub-pixels of some colors may have the same area, and at least the area of the sub-pixel of one color may be different from the area of the sub-pixels of the other colors. Examples of forms of arrangement of the sub-pixels of four colors of RGBY include, in order form the sub-pixel having the largest aperture area, a form of arrangement of R, B, G, Y, a form of arrangement of R and B, G, Y, a form of arrangement of R, B, G and Y, a form of arrangement of R and B, G and Y, a form of arrangement of R, B, Y, G, a form of arrangement of R, G, B, Y, a form of arrangement of R, B, Y and G, a form of arrangement of B, R, G, Y, a form of arrangement of B, R, Y, G, a form of arrangement of B, G, R, Y, and a form of arrangement of B and G, R, Y. Note that, for example, "a form of arrangement of B and G, R, Y in order form the sub-pixel having the largest aperture area" means a form in which the aperture areas of the blue and green sub-pixels are the same and the largest, in which the aperture area of the yellow sub-pixel is the smallest, and in which the aperture area of the red sub-pixel is smaller than the aperture area of the blue and green sub-pixels and is larger than the aperture area of the yellow sub-pixel. Usually, in order to improve the luminance, the area of a sub-pixel having a relatively low luminosity factor (brightness) is relatively increased. Examples of this form to improve the luminance include a form in which the area of the sub-pixels of R and B is made larger than the area of the sub-pixels of G and Y. Specifically, examples of the preferred form to improve the luminance include a form of arrangement of R and B, G and Y, that is, a form in which the aperture area of the sub-pixels of R and B is the same and the largest, and in which the aperture area of the sub-pixels of G and Y is the same and the smallest. Note that W may be used instead of Y described above. In this specification, a sub-pixel having a larger area means a sub-pixel having a larger area in the case where sub-pixels in a pixel are divided into sub-pixels having relatively larger areas and sub-pixels having relatively smaller areas. The same applies to a sub-pixel having a smaller area.

The above-described form in which a sub-pixel overlaps with a plurality of signal lines preferably means a form in which a sub-pixel overlaps with main lines of the signal lines (which may also be referred to as main signal lines). From a viewpoint of sufficiently preventing unevenness of luminance, a form is preferred in which the signal lines include a signal line used for driving a sub-pixel having a smaller area. Further, a form is preferred in which, in plan view of the main surface of the display panel, the main lines of the signal lines do not overlap with a sub-pixel having a smaller area. The form in which a signal line does not overlap with a sub-pixel may be a form in which a signal line does not substantially overlap with a sub-pixel as long as the effects of the present invention are exhibited. A form is more preferred in which, in plan view of the main surface of the display panel, a sub-pixel having a smaller area does not overlap with the signal lines (a main line and a sub-line of the signal lines). Especially, a form is preferred in which the sub-pixel having the smaller area is the sub-pixel having the smallest area. This is because, with such form, in the sub-pixel having the smallest total capacitance, that is, the sub-pixel having the largest capacitance variation, the capacitance (Csd) between the sub-pixel electrode and the signal lines can be selectively reduced, and thereby, especially unevenness of luminance can be sufficiently prevented. In this specification, in the case where a signal line is divided into a trunk line and a branch line branched from the trunk line, the main line means the trunk line. Further, the sub-line means the branch line branched from the trunk line. Note that, when a signal line is formed by one wiring with no branch line, the signal line itself means a main line.

Further, a form is preferred in which a sub-pixel having a larger area and a sub-pixel having a smaller area are arranged adjacent to each other. Further, a preferred form of the present invention is a form in which two signal lines of the signal line for the sub-pixel having the larger area and the signal line for the sub-pixel adjacent to the sub-pixel having the larger area are collectively arranged on the sub-pixel having the larger area. Especially, a preferred form of the present invention is a form in which no signal line is arranged on the sub-pixel having the smaller area (small aperture area), and in which two signal lines of the signal line for the sub-pixel having the larger area and the signal line for the sub-pixel adjacent to the sub-pixel having the larger area are collectively arranged on the sub-pixel having the larger area. For example, a preferred form is configured such that the sub-pixel on which two signal lines are arranged, and the sub-pixel on which no signal line is arranged are alternately arranged. That a signal line is arranged on a sub-pixel means that, in plan view of the main surface of the display panel, the signal line overlaps with the sub-pixel.

The ratio of the area of the sub-pixel having the larger area and the area of the sub-pixel having the smaller area is usually in the range of 1.1 to 4, and preferably, in the range of 1.2 to 2.2.
From viewpoints of luminance and wide color reproduction range, a form is preferred in which a sub-pixel having a relatively high luminosity factor is arranged as the sub-pixel having the smaller area. In other words, a form is preferred in which a sub-pixel having a relatively low luminosity factor is arranged as the sub-pixel having the larger area.

It is preferred that the polarities of the two signal lines collectively arranged are reverse to each other. Thereby, the longitudinal shadow can be avoided. Further, when the polarities reverse to each other are also mixed in the same column direction as in the case of the so-called dot inversion, it is also possible to obtain a display quality improvement effect (providing fine display) based on a high spatial frequency.
Further, in the case where an even number of sub-pixels are included in one pixel in the same row direction (an even number of picture elements are included in one pixel in the same row direction), it is preferred that the polarities of the signal lines overlapping with each of the sub-pixels (picture elements) included in one pixel are reversed at a natural number multiple of the number of the picture elements included in one pixel. Thereby, the lateral shadow can be avoided.

A form is preferred in which the length of the portion of the signal line, which portion overlaps with a sub-pixel electrode of a sub-pixel, is shorter than the length of the longest portion of the sub-pixel electrode of the sub-pixel. Thereby, the absolute value of the capacitance formed between the sub-pixel and the signal line corresponding to the sub-pixel (also referred to as Csd of the sub-pixel in this specification), and the absolute value of the capacitance formed between the sub-pixel and the signal line corresponding to the other sub-pixel adjacent to the sub-pixel (also referred to as Csd of the other sub-pixel in this specification) can be reduced, and hence the effect of suppressing unevenness of luminance is increased. Note that, in a medium size model having small sub-pixels, a form in which the sub-pixels are arranged in a two-by-two matrix shape is preferred in the present invention, in view of that the two-by-two matrix-shaped array is easily used to correspond to multiple original colors, and in view of that the above-described forms can be easily obtained by arranging sub-pixels in the two-by-two matrix shape.

Further, the present invention is to provide a display panel (also referred to as the second present invention) including a pair of substrates, a display element sandwiched between the pair of substrates, and pixels each formed of sub-pixels of four or more colors, the display panel being featured in that one of the pair of substrates includes scanning lines, signal lines, and sub-pixel electrodes, and in that at least one of the sub-pixels of four or more colors has different brightness, and in plan view of the main surface of the display panel, the sub-pixel having the lower brightness overlaps with a plurality of the signal lines. With such form, in the sub-pixel which has higher brightness and in which unevenness of luminance due to capacity variation is easily visually recognized, the capacitance variation can be selectively prevented by the same mechanism as described above, and hence the occurrence of unevenness of luminance can be sufficiently prevented. Further, in the case where minute line width variation of a signal line is caused in a manufacturing process, when the signal line is arranged on the sub-pixel having the lower brightness, the influence of the line width variation on the aperture ratio is made to be hardly visually recognized.

That at least one of sub-pixels of four or more colors has different brightness means that sub-pixels of some colors may have the same brightness, and hence the brightness of at least one color may be different from the brightness of the other colors. Usually, the area of a sub-pixel having lower brightness is relatively increased in order to increase the luminance. Examples of this form include a form in which, in the case of four colors of RGBY, the area of the sub-pixels of R and B is made larger than the area of the sub-pixels of G and Y, and a form in which, in the case of four colors of RGBW, the area of the sub-pixels of R and B is made larger than the area of the sub-pixels of G and W. In this specification, a sub-pixel having higher brightness means a sub-pixel having higher brightness in the case where sub-pixels in one pixel are divided into sub-pixels having relatively higher brightness and sub-pixels having relatively lower brightness. The same applies to the sub-pixel having lower brightness.

The preferred form of the display panel in which the sub-pixel having lower brightness overlaps with a plurality of the signal lines is the same as the preferred form of the display panel in which the sub-pixel having the larger area overlaps with a plurality of the signal lines. For example, also in the display panel in which the sub-pixel having lower brightness overlaps with a plurality of the signal lines, a form is preferred in which the signal lines include a signal line used for driving the sub-pixel having higher brightness. Further, in the display panel, a form is preferred in which, in plan view of the main surface of the display panel, the sub-pixel having higher brightness does not overlap with the main line of the signal lines. The form in which the sub-pixel does not overlap with the signal line means the form as described above. A form is more preferred in which, in plan view of the main surface of the display panel, the sub-pixel having the smaller area does not overlap with the signal lines (the main line and the sub-line of the signal lines). Especially, a form is preferred in which the sub-pixel having higher brightness is the sub-pixel having the highest brightness. Thereby, in the sub-pixel having the highest brightness, that is, in the sub-pixel in which unevenness of luminance is most easily visually recognized due to capacitance variation, the capacitance (Csd) between the sub-pixel electrode and the signal lines can be selectively reduced, and hence, especially unevenness of luminance can be sufficiently prevented.

In the present invention, a form of the first present invention or of the second the present invention, or a form in which the first present invention and the second present invention are combined together is preferred. In the following, preferred forms of the first present invention and the second present invention will be described in detail.
It is preferred that, in plan view of the main surface of the display panel, the pixel includes a rectangular light shielding region in the region that is included in the display region and that is not included in the region in which the sub-pixels are arranged. The rectangular shape of the region may mean that, as long as the effect of the present invention is exhibited, the region has a projection and/or a recess, and has a substantially rectangular shape. In other words, it is preferred that, when a region including one pixel is divided into a plurality of rectangular regions, the length of the rectangular region in the direction in parallel with the long side direction of the rectangular region is different in at least the sub-pixel of one color, and that the light shielding region is arranged in the space formed in correspondence with the length reduced for formation of the sub-pixel having the shorter length. For example, when, in addition to the pattern of non-transmissive portions, such as a TFT element and a contact hole, of the sub-pixel having the smaller area, the pattern of non-transmissive portions, such as a TFT element and a contact hole, of the sub-pixel having the larger area are arranged in the light shielding region, it is possible to improve the aperture ratio, especially the aperture ratio of the sub-pixel having the larger area.

A form is preferred in which a columnar spacer is arranged in the light shielding region. Especially, in the case where a multilayer column (spacer) is used, a form is preferred in which the multilayer column is arranged in a portion where the sub-pixel electrode of the sub-pixel having the smaller area is not arranged.
Thereby, it is possible to avoid the vertical leakage (leakage between the sub-pixel electrode and the opposed common electrode [COM electrode]). Especially, in the case where the sub-pixel is small, the form in which the columnar spacer is arranged in the light shielding region is particularly preferred.

It is preferred that the plurality of signal lines are two signal lines. Further, it is particularly preferred that the polarities of signals respectively applied to the two signal lines are reverse to each other. Further, it is preferred that, in the display panel, the polarity of the potential of the sub-pixel electrode for display of each color is reversed at every natural number multiple of the number of sub-pixels included in one pixel in the same row direction. This form is particularly preferred for a form in which four or more even number of sub-pixel electrodes are arranged per one pixel. In this way, when a measure is taken so as to prevent the same polarity of the potential of the sub-pixel electrode from being collectively arranged in the lateral direction at the time of monochromatic display, it is possible to avoid the lateral shadow. The above-described form may be based on a driving method, or may also be based on a design.

In the display panel in which the one of the pair of substrates includes switching elements and storage capacitance wirings, and the other of the pair of substrates includes a common electrode, in which each of the sub-pixel electrodes is arranged in correspondence with one sub-pixel, in which the scanning line and the sub-pixel electrode form gate-drain capacitance Cgd, and the signal line and the sub-pixel electrode form source-drain capacitance Csd, and in which the storage capacitance wiring and the sub-pixel electrode form storage capacitance Ccs, and the sub-pixel electrode and the common electrode form liquid crystal capacitance Clc, it is preferred that, when a potential difference between the scanning lines at the time of driving the display panel is set as Vg^{p-p}, at least one of the pull-in voltage ΔVd = Cgd / (Cgd + Csd + Ccs + Clc) x Vg^{P-P}, the difference Ω in the value of ΔVd between the time of white display and the time of black display, and the value of Ccs/Clc is the same for each color. Specifically, it is preferred that at least one of the size of the switching element and the value of the storage capacitance of the sub-pixel having the larger area is larger than at least one of the size of the switching element and the value of the storage capacitance of the sub-pixel having the smaller area. With such form, at least one of the value of ΔVd, the value of Ω, and the value of Ccs/Clc can be made substantially the same for all the colors. Note that the above-described form in which "at least one of the size of the switching element and the value of the storage capacitance of the sub-pixel having the larger area is larger than at least one of the size of the switching element and the value of the storage capacitance of the sub-pixel having the smaller area" means a form in which the size of the switching element of the sub-pixel having the larger area is larger than the size of the switching element of the sub-pixel having the smaller area, or a form in which the value of the storage capacitance of the sub-pixel having the larger area is larger than the value of the storage capacitance of the sub-pixel having the smaller area, or a form in which these forms are combined together. Thereby, the difference in the ratios of the optimum opposed voltage and the storage capacitance between the colors are eliminated, so that excellent display quality without image persistence, and the like, can be obtained. Note that the potential difference Vg^{p-p} of a scanning line is expressed as |Vgh - Vgl| (where Vgh represents the highest voltage in the scanning line at the time of turning on and off the TFT, and Vgl similarly represents the lowest voltage in the scanning line). Further, the difference Ω in the value of ΔVd between the time of white display and the time of black display is a difference in the value ΔVd between the time of white display and the time of black display, which difference is caused due to the difference in the capacitance in the liquid crystal between the time of white display and the time of black display. The difference Ω in the value of ΔVd between the time of white display and the time of black display is obtained by the following expression: Ω = |ΔVd (black) - ΔVd (white)| = |Cgd / (Cgd + Csd + Ccs + Clc (black)) × Vg^{p-p} - Cgd / (Cgd + Csd + Ccs + Clc (white)) × Vg^{p-p}|. Note that Clc (black) means the value of Clc at the time of black display, and Clc (white) means the value of Clc at the time of white display. In the above-described form, the form is particularly preferred in which the sub-pixel electrode and the storage capacitance of the sub-pixel having the smaller area are provided in the light shielding region. Thereby, the aperture portion of the sub-pixel having the smaller area can be substantially enlarged, and a liquid crystal display device having high luminance can be obtained.

It is preferred that, in the sub-pixel including the sub-pixel electrode overlapping with the plurality of signal lines, the overlapping length between the plurality of signal lines and the sub-pixel electrode is shorter than the length of the longest portion of the sub-pixel electrode. Thereby, the value of ΔVdr which is a variation of the drain potential in the sub-pixel can be reduced, so that unevenness of luminance can be reduced and also the area of the signal lines in the aperture portion can be reduced. Therefore, the influence of line width variation on the aperture ratio can be further reduced.

It is preferred that the sub-pixel includes a plurality of sub-pixel electrodes, each having the same area, and that the number of the sub-pixel electrodes of at least the sub-pixel of one color is different from the number of sub-pixel electrodes of the other sub-pixel. Thereby, in various liquid crystal display devices, the difference in the response speed characteristic between the sub-pixels can be sufficiently reduced by making the alignment state more uniform, and also the luminance can be sufficiently increased by changing the areas of the sub-pixels. That the area of the sub-pixel electrode is the same means that the area may be substantially the same as long as the effects of the present invention can be substantially exhibited.

It is preferred that the display element is a liquid crystal layer. In other words, it is preferred that a display panel according to the present invention is a liquid crystal display panel using a liquid crystal layer as the display element. When the present invention is applied to a liquid crystal display panel including a pair of substrates and a liquid crystal layer sandwiched between the pair of substrates, the effects of the present invention can be more sufficiently exhibited. The display panel according to the present invention can be suitably applied to a CPA mode, and an MVA mode, and also applied to IPS modes, such as a TN (Twisted Nematic) mode, a TBA (Transverse Bend Alignment) mode, and an FFS (Frings Field Switching) mode.

Also, the present invention is to provide a display device including the display panel according to the present invention.
Thereby, the same effects as the display panel according to the present invention as described above can be exhibited. Further, preferred forms of the display panel provided in the display device according to the present invention are the same as the above-described preferred forms of the display panel according to the present invention.

The present invention is especially useful for a model having small sub-pixels. For example, the length of the side of the sub-pixel is preferably about 100 µm or less, and more preferably 80 µm or less. A preferred lower limit value of the length of the side of the sub-pixel is 30 µm.
Further, a display panel having high luminance is obtained, and hence the present invention is also useful for applications in which, because the display panel is driven by a battery, low power consumption is especially required.
Therefore, the present invention is preferably applied to medium-sized products, such as electronic books, photo frames, IAs, and PCs, and small-sized products, such as portable game machines.

The configurations of the display panel and the display device of the present invention are not especially limited by other components as long as they essentially include such components. The other configurations usually used for the display panel and the display device can be suitably applied.

The aforementioned modes may be employed in appropriate combination as long as the combination is not beyond the spirit of the present invention.

### - Advantageous Effects of Invention

With the display panel and the display device according to the present invention, white luminance can be sufficiently improved by changing the display area for each color, and unevenness of luminance can be sufficiently suppressed.

### BRIEF DESCRIPTION OF DRAWINGS

[Fig. 1] Fig. 1 is a schematic plan view showing a liquid crystal display panel of Embodiment 1-1.
[Fig. 2] Fig. 2 is a schematic plan view showing a liquid crystal display panel of Embodiment 1-2.
[Fig. 3] Fig. 3 is a schematic plan view showing a liquid crystal display panel of Embodiment 2-1(a) and Embodiment 2-1(b).
[Fig. 4] Fig. 4 is a view showing sub-pixel images of Embodiment 2-1(b).
[Fig. 5] Fig. 5 is a schematic plan view showing a liquid crystal display panel of Embodiment 2-2(a).
[Fig. 6] Fig. 6 is a schematic plan view showing a liquid crystal display panel of Embodiment 2-2(b).
[Fig. 7] Fig. 7 is a view showing sub-pixel images of Embodiment 2-2(b).
[Fig. 8] Fig. 8 is a schematic plan view showing a liquid crystal display panel of Embodiment 3.
[Fig. 9] Fig. 9 is a view showing only domain division means provided in the sub-pixel electrode and the common electrode of the sub-pixel in Fig. 8.
[Fig. 10] Fig. 10 is a view showing only the sub-pixel electrode of the sub-pixel and the signal line in Fig. 8.
[Fig. 11] Fig. 11 is a schematic plan view showing an arrangement relation of sub-pixels and signal lines in a conventional liquid crystal display panel.
[Fig. 12] Fig. 12 is a schematic plan view showing an arrangement relation of sub-pixels and signal lines in a conventional liquid crystal display panel.
[Fig. 13] Fig. 13 is a schematic plan view showing an example of an arrangement relation of sub-pixels and signal lines in a display panel according to the present invention.

### DESCRIPTION OF EMBODIMENTS

The present invention will be mentioned in more detail referring to the drawings in the following embodiments, but is not limited to these embodiments.
Note that a substrate provided with TFTs is also referred to as a TFT array substrate. A substrate which is provided with a color filter (CF) and which faces the TFT array substrate is also referred to as an opposed substrate or a CF substrate. Further, in the following embodiments, for the sake of brevity of description, a sub-pixel representing each color is also referred to simply as a pixel. In the following, only a form using RGBY is described, but instead of RGBY, a form using four primary colors, such as RGBW, or more (for example, at least four or more colors selected from a group consisting of green (G), yellow (Y), white (W), red (R), blue (B), and magenta (M)) can be suitably applied. Further, that the area of a color having a comparatively high luminosity factor, and the like, is made small and also the area of a color having a comparatively low luminosity factor, and the like, is made large means, for example, that the aperture area of green (G), yellow (Y), and white (W), each having a higher luminosity factor, is small, and also the aperture area of red (R), blue (B), and magenta (M), each having a lower luminosity factor, is large. Such design is one of preferred forms of the present invention. A sub-pixel is also referred to as a picture element in this specification.

### Embodiment 1

Embodiment 1-1 relates to a liquid crystal display panel in which sub-pixels of even number of colors, not less than four colors, are arranged in a stripe shape, so as to form a unit pixel.

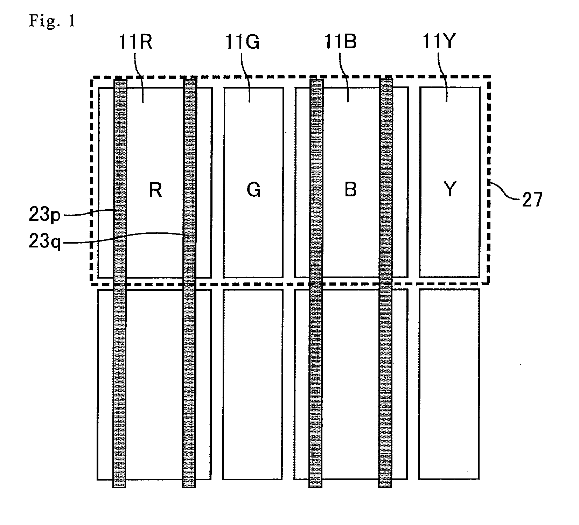

Fig. 1 is a schematic plan view showing a liquid crystal display panel of Embodiment 1-1.
Scanning lines (not shown) and signal lines (data lines) 23p and 23q are arranged in a grid shape on the main surface of a glass substrate.
Sub-pixel electrodes 11R, 11G, 11B, and 11Y are respectively arranged in a plurality of pixel regions of red (R), green (G), blue (B), and yellow (Y) (or, for example, white (W) may be used instead of yellow (Y)). A unit pixel 27 is formed by these four pixel regions. Note that the area of the effective aperture portion of the sub-pixel (sub-pixel electrode) is different for each color. Here, according to the difference in the luminosity factor between the colors, the area of the effective aperture portion of the sub-pixel is different between the color having the comparatively high luminosity factor and the color having the comparatively low luminosity factor. In Embodiment 1, the area of the effective aperture portion of the sub-pixel for the color having the comparatively high luminosity factor is made small, while the area of the effective aperture portion of the sub-pixel for the color having the comparatively low luminosity factor is made large. Specifically, the unit pixel 27 is formed by the sub-pixels respectively displaying four or more plurality of colors, and the area of the effective aperture portions for R and B is made large, and the area of the effective aperture portions for G and Y (or W) is made small. In other words, as for the sub-pixels RGBY, the area of the sub-pixels for R and B is different from the area of the sub-pixels for G and Y. That is, the area of the sub-pixels for R and B is large (sub-pixels having a larger area are used for R and B), and the area of the sub-pixels for G and Y (or W) is small (sub-pixels having a smaller area are used for G and Y (or W)). A form is preferred in which, according to the difference in the luminosity factor between the colors, the aperture area of the sub-pixel for the color having the comparatively high luminosity factor is made small.
Further, the sub-pixel on which two signal lines are arranged, and the sub-pixel on which no signal line is arranged are alternately arranged.
The ratio of the area of the sub-pixel having the large aperture area and the area of the sub-pixel having the small aperture area is usually set as RB : GY (RB : GW) = 4 : 1 to 1 : 1. More preferably, the ratio is set as 2.2 : 1 to 1.2 : 1.

The polarities of the two signal lines, which are collectively arranged, are set to be reverse to each other. It is more preferred that the polarities of the signal lines are reversed between mutually adjacent sub-pixel groups (mutually adjacent unit pixels) (the polarities of the signal lines may be reversed for each unit pixel or every two unit pixels). For example, in the form in which the polarities of the signal lines are reversed for each unit pixel, the polarities of the signal lines are repeatedly arranged in a pattern of +, -, +, -, -, +, -, +. In the form in which the polarities of the signal lines are reversed every two unit pixels, the polarities of the signal lines are repeatedly arranged in a pattern of +, -, +, -, +, -, +, -, -, +, -, +, -, +, -, +.

In the display panel shown in Fig. 1, each of the plurality of sub-pixels RGBY has a rectangular shape (a substantially rectangular shape), but may have a substantially elliptical shape, and the like. Especially, it is preferred that each of the plurality of sub-pixels RGBY has a rectangular shape.

The signal line is not arranged on the pixels (sub-pixels having the smaller area) of green (G) and yellow (Y) (the pixel of yellow (Y) may be replaced by, for example, the pixel of white (W)). On the other hand, the two signal lines 23p and 23q are arranged so as to overlap with each of the pixels (larger area sub-pixels) of red (R) and blue (B). That is, the signal line is not arranged on the sub-pixel having the small sub-pixel aperture area, and further the two signal lines are collectively arranged on the sub-pixel having the large sub-pixel aperture area, the two signal lines including the signal line for the sub-pixel which has the small sub-pixel aperture area and which is adjacent to the sub-pixel having the large sub-pixel aperture area.

The opposed substrate is configured such that a red (R) CF layer, a green (G) CF layer, a blue (B) CF layer, and a yellow (Y) CF layer are arranged on the main surface of a glass substrate in correspondence with each of the pixel regions, and a light shielding portion (BM), which is referred to as a black matrix, is provided to partition the respective CF layers.

The panel is configured to display four colors, such as RGBY and RGBW. In the case of RGBY, it is effective that the area of sub-pixels of R and B having the low luminosity factor is made large, and that the area of sub-pixels of G and Y having the high luminosity factor is made small, because the color reproduction range can be increased and the transmissivity is improved. The ratio of the large sub-pixel area and the small sub-pixel area is in the range of RB : GY (RB : GW) = 4 : 1 to 1 : 1. More preferably, the ratio of the large sub-pixel area and the small sub-pixel area is in the range of 2.2 : 1 to 1.2 : 1.

Further, the liquid crystal display panel of Embodiment 1-1 has the following features.
In the display panel, the lateral shadow (crosstalk) can be avoided in such a manner that the polarity of the same color of the same row is kept balanced, that is, in such a manner that, in the pixel row direction, the polarity of the potential of the sub-pixel electrode, applied for displaying each color, is reversed for each of natural number multiples of the number of signal lines included in one pixel of the same row.

The liquid crystal display panel of Embodiment 1-1 includes a pair of substrates, and a liquid crystal layer sandwiched between the pair of substrates. In other words, the liquid crystal display panel of Embodiment 1-1 includes a first substrate (array substrate), a second substrate (opposed substrate), and a liquid crystal layer sandwiched between the first substrate and the second substrate. The first substrate includes a plurality of scanning lines / a plurality of signal lines (data lines) 23p, 23q / switching elements/ an interlayer dielectric / sub-pixel electrodes on the interlayer dielectric / an alignment layer in this order from the side of the substrate. The second substrate includes color filters and an alignment layer (vertical alignment layer). Further, the liquid crystal layer is made of a liquid crystal material having negative dielectric anisotropy. The liquid crystal display modes (CPA, MVA, and the like) are not limited in particular, but as described above, the vertical liquid crystal mode is adopted in the present embodiment, which is a preferred form.

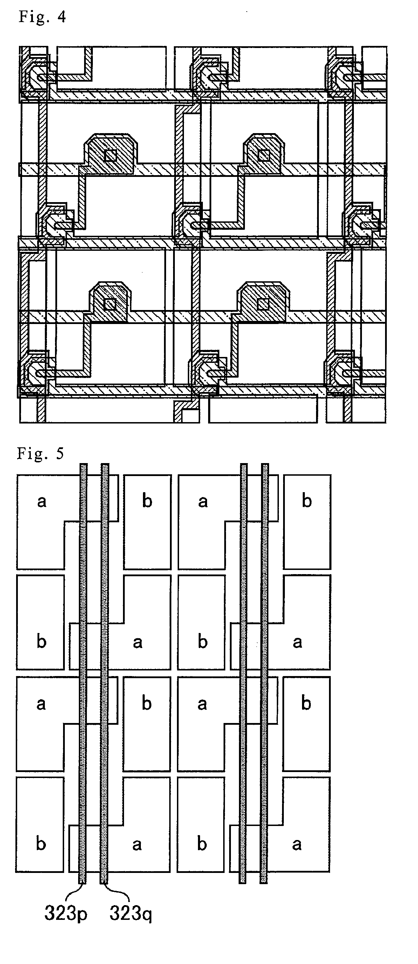

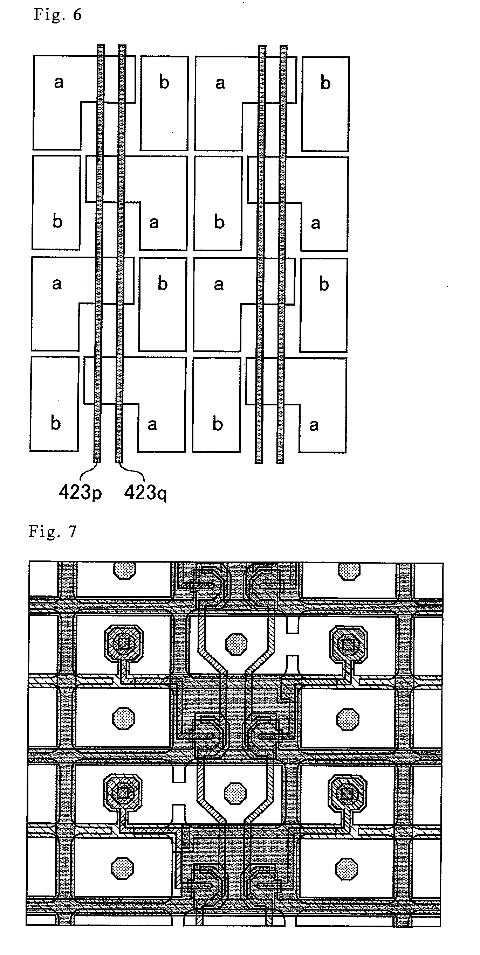

The liquid crystal display panel of Embodiment 1-1 is configured such that at least one of the size of the switching element and the storage capacitance of a sub-pixel having a larger area is made larger than at least one of the size of the switching element and the storage capacitance of a sub-pixel having a smaller area. Note that, for example, as will be described below, Fig. 4 shows a form in which the storage capacitance of a sub-pixel having a larger area is made large, and in which the storage capacitance of a sub-pixel having a smaller area is made small. Further, as will be described below, Fig. 7 also shows a form in which the storage capacitance of a sub-pixel having a larger area is made large, and in which the storage capacitance of a sub-pixel having a smaller area is made small.
Thereby, when the gate-drain capacitance formed by the scanning line and the sub-pixel electrode is set as Cgd, and the source-drain capacitance formed by the signal line and the sub-pixel electrode is set as Csd, when the storage capacitance formed by the storage capacitance wiring and the sub-pixel electrode is set as Ccs, and the liquid crystal capacitance formed by the sub-pixel electrode and the common electrode is set as Clc, and when the potential difference between the scanning lines at the time of driving the display panel is set as Vg^{p-p}, at least one of the pull-in voltage ΔVd = Cgd / (Cgd + Csd + Ccs + Clc) × Vg^{p-p}, the difference Ω in the value of ΔVd between the time of white display and the time of black display, and the value of Ccs/Clc is the same for each of the colors. The difference in the ratio of the optimum opposed voltage and the difference in the ratio of the storage capacitance are eliminated between the respective colors, so that a panel without image persistence, and the like, and having excellent display quality can be obtained.

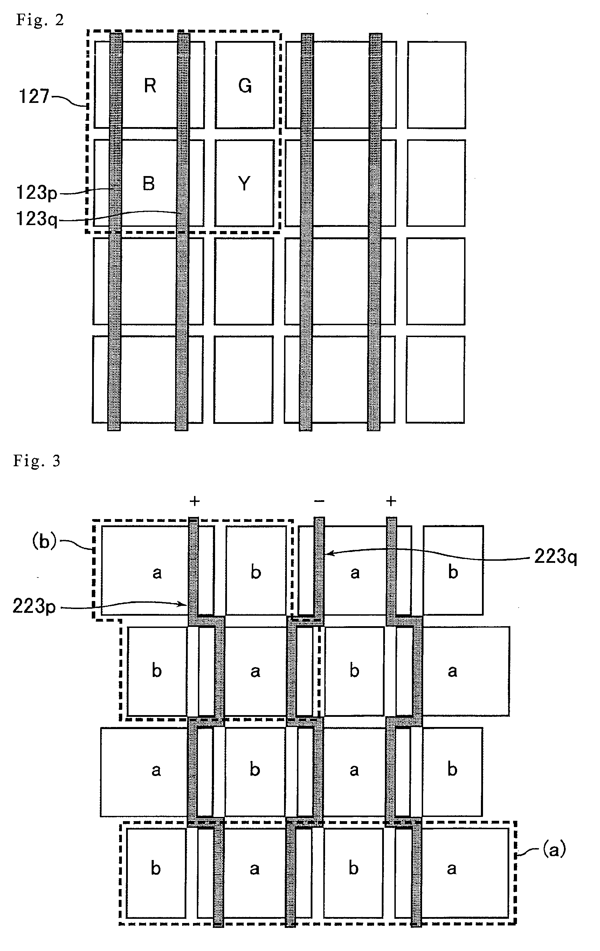

Fig. 2 is a schematic plan view showing a liquid crystal display panel of Embodiment 1-2.
Embodiment 1-2 relates to a liquid crystal display panel in which sub-pixels of four or more even number of colors are arranged in a two-by-two matrix shape so as to form a unit pixel 127. The other conditions are the same as the conditions of Embodiment 1-1 described above. Especially, the following conditions, and the like, are the same as the conditions of Embodiment 1-1 and form a preferred form according to the present invention. The conditions include: the condition that no signal line is arranged on a sub-pixel having a small sub-pixel aperture area, and two signal lines 123p and 123q including the signal line of the sub-pixel having the small sub-pixel aperture area are collectively arranged on a sub-pixel which has a large sub-pixel aperture area and which is adjacent to the sub-pixel having the small sub-pixel aperture area; the condition that each of sub-pixels for colors of R (red) and B (blue) having a comparatively low luminosity factor has a large sub-pixel aperture area, and each of sub-pixels for colors of G (green) and Y (yellow) or W (white) having a comparatively high luminosity factor has a small sub-pixel aperture area; the condition that the ratio of the sub-pixel aperture area between the sub-pixel having the larger area and the sub-pixel having the smaller area is normally in the range of 1.1 to 4, and preferably in the range of 1.2 to 2.2; the condition that the sub-pixel on which two signal lines are arranged, and the sub-pixel on which no signal line is arranged are alternately arranged; the condition that the polarities of two signal lines collectively arranged on the sub-pixel are set to be reverse to each other; and the condition that the polarities of the signal lines are reversed between mutually adjacent groups (unit pixels) of sub-pixels (the polarities of the signal lines may be reversed for each unit pixel, or every two unit pixels).

Embodiments 1-1 and 1-2 described above are configured such that each of the same sub-pixel having a large sub-pixel aperture area, and the same sub-pixel having a small sub-pixel aperture area, is repeatedly arranged in the longitudinal direction (the direction of the signal line).

In a general form, the capacitance between S (signal line) and D (sub-pixel electrode) is set as Csd. Further, ΔVdr is defined as ΔVdr = (Csd1 / Cpix) × ΔVs1 - (Csd2 /Cpix) × ΔVs2 (Expression 1). Here, Csd1 represents the capacitance formed by a sub-pixel electrode and the signal line for driving the sub-pixel electrode, and Csd2 represents the capacitance formed by the sub-pixel electrode and the signal line for driving the other sub-pixel electrode adjacent to the sub-pixel electrode. Further, ΔVs1 represents a value of voltage change obtained by subtracting the potential before a change in the potential of the signal line for driving the sub-pixel electrode from the potential after the change in the potential of the signal line for driving the sub-pixel electrode, and ΔVs2 represents a value of voltage change obtained by subtracting the potential before a change in the potential of the signal line for driving the other sub-pixel electrode adjacent to the sub-pixel electrode from the potential after the change in the potential of the signal line for driving the other sub-pixel electrode.

Further, in the case where the polarity of the signal of the signal line for driving the sub-pixel is reverse to the polarity of the signal line for driving the other sub-pixel (for example, in the case of so-called dot inversion driving), when ΔVs1 = ΔVs2 = ΔVs (at the time of gray display), Expression 2 becomes as follows: ΔVdr = {(Csd1 - Csd2) / Cpix} × ΔVs (Expression 2).
When misalignment occurs between the signal line (source layer) and the sub-pixel electrode (sub-pixel electrode layer) in a manufacturing process, the value of (Csd1 - Csd2) in Expression 2 is changed, and the change is visually recognized as unevenness in the gray display. Here, the change of ΔVdr at the time of occurrence of the misalignment is set as ΔΔVdr. The value of ΔΔVdr is expressed as follows: ΔΔVdr = |ΔVdr (in a portion with no misalignment) - ΔVdr (in a portion with misalignment) | (Expression 3).

### Conventional Art

Under the premise that Cpix ≈ Ccs + Clc and that Ccs / Clc = const. (constant), the liquid crystal capacitance of an RGB panel (3 colors) is set as Clc, the sub-pixel capacitance is set as Cpix, the liquid crystal capacitance at the time when the RGB panel is made to correspond to RGBY (four colors) is set as Clc', and the sub-pixel capacitance at this time is set as Cpix'. Here, in the case where RB : GY = 1 : 1, the size of the sub-pixel becomes 3/4 times the size of the sub-pixel in the RGB panel, so that Clc' = 3/4 Clc, and Cpix' = 3/4 Cpix. On the other hand, since the values of Csd1 and Csd2 are not changed, the value of ΔΔVdr in the panel corresponding to RGBY becomes 1.3 times the value of ΔΔVdr in the RGB panel, and hence the unevenness is easily visually recognized in this case.
Further, in the case where RB : GY = 1.5 : = 1, at the time of occurrence of misalignment, ΔVdr becomes 1.1 times for RB, and 1.7 times for GY. In consideration of such values, and in consideration of the difference in the luminosity factor and the area between the respective colors of RGBY, ΔΔVdr per unit pixel in the panel corresponding to RGBY becomes about 1.5 times the value of ΔΔVdr in the RGB panel, and hence the unevenness is more significantly visually recognized.

### Embodiment 1-1

In Embodiment 1-1, two signal lines are arranged on the inner side of a sub-pixel electrode of a sub-pixel having a larger area, and signals having reverse polarities are respectively applied to the signal lines. Thereby, the generation of vertical shadow can be prevented, and ΔΔVdr can be reduced to a value which can be almost neglected. Therefore, a sufficient process margin can be secured, and a liquid crystal display device having high display quality and without unevenness can be obtained.

### Embodiment 1-2

The value of Cpix is almost the same as the value in Embodiment 1-1, but in Embodiment 1-2, the sub-pixels are arranged in a two-by-two matrix shape, so that the length of the signal line in one sub-pixel is reduced. Therefore, the value of ΔVdr becomes about a half of the value of ΔVdr in Embodiment 1-1.
Further, in Embodiment 1-2, two signal lines are arranged on the sub-pixel having the larger area, and signals having reverse polarities are respectively applied to the signal lines. Thereby, the generation of vertical shadow can be prevented, and ΔΔVdr can be reduced to a value which can be almost neglected.
Therefore, a sufficient process margin can be secured, and a liquid crystal display device having high display quality and without unevenness can be obtained. The sufficient process margin means that the permissible range (especially the permissible range of misalignment), in which the generation of defects can be prevented at the time of exposure and development for pattern formation, is sufficiently large.

### Embodiment 2

Fig. 3 is a schematic plan view showing a liquid crystal display panel of Embodiment 2-1(a) and a liquid crystal display panel of Embodiment 2-1(b). In Fig. 3, the portion surrounded by the dotted line (a) shows a unit pixel of Embodiment 2-1(a). Further, in Fig. 3, the portion surrounded by the dotted line (b) shows a unit pixel of Embodiment 2-1(b). Fig. 4 is a view showing sub-pixel images of Embodiment 2-1(b). Fig. 5 is a schematic plan view showing a liquid crystal display panel of Embodiment 2-2(a). Fig. 6 is a schematic plan view showing a liquid crystal display panel of Embodiment 2-2(b). Fig. 7 is a view showing sub-pixel images of Embodiment 2-2(b), and exemplifying a two-by-two matrix array of sub-pixels in a CPA mode liquid crystal display panel.

In Embodiment 2-1 and Embodiment 2-2, when viewed from the perspective of the figure, a sub-pixel having a large aperture area and a sub-pixel having a small aperture area are alternately arranged not only in the lateral direction but also in the longitudinal direction. In other words, Embodiment 2-1 and Embodiment 2-2 are configured such that a sub-pixel having a large sub-pixel aperture area and a sub-pixel having a small sub-pixel aperture area are alternately arranged in the longitudinal direction (in the S bus line direction).

Further, in Embodiment 2-2, as shown in Fig. 5 and Fig. 6, the length of portions of signal lines 323p and 323q or of signal lines 423p and 423q, which portions overlap with the sub-pixel electrode of the sub-pixel a, is shorter than the length of the longest portion of the sub-pixel electrode of the sub-pixel a. Such form is suitable because the value of Csd in the sub-pixel can be reduced. In other words, the overlapping area between the signal line and the sub-pixel electrode can be reduced, and, in correspondence with the reduced area, the signal line can be made to pass through the region in which the sub-pixel electrode is not arranged. For this reason, the value of Csd, and the like, can be reduced, and unevenness of luminance can be reduced.

Further, in Embodiment 2-2, although not shown, a multilayer column is arranged in the portion in which the sub-pixel electrode of the sub-pixel having the small aperture area is not arranged. Thereby, it is possible to avoid the vertical leakage (leakage between the sub-pixel electrode and the opposed COM electrode). Further, as shown in Fig. 7, in the portion in which the sub-pixel electrode of the sub-pixel having the small aperture area is not arranged, in addition to the multilayer columns, a TFT of the sub-pixel, and a TFT of the other sub-pixel adjacent to the sub-pixel can be suitably arranged, and also the contact hole and CS capacitance, and the like, of the sub-pixel and of the other sub-pixel can be suitably arranged. Thereby, the aperture ratio can be sufficiently increased. As described above, the form, in which the signal lines are made to pass through the dead space (the region where the sub-pixel electrode is not arranged, and/or the rectangular light shielding region), has such advantages as that unevenness of luminance is reduced by reducing Csd, and the like, and that the aperture ratio is increased by compactly arranging the light shielding materials, such as TFTs.

Further, in Embodiment 2-2, the polarities of the signal lines are reversed between mutually adjacent groups of the sub-pixels (the polarities of the signal lines may be reversed for each group or every two or more natural number of groups). In this way, with the measure to prevent the signal lines with the same polarity from being arranged side by side in the lateral direction at the time of monochromatic display, it is possible to avoid the lateral shadow.

The other forms of Embodiment 2-1(a), Embodiment 2-1(b), Embodiment 2-2(a), and Embodiment 2-2(b) are the same as the forms of Embodiment 1.

### Embodiment 2-1

The effects of Embodiment 2-1 are the same as the effects of Embodiment 1-2. Further, when colors having high luminosity factors are mixed in the longitudinal direction and in the lateral direction, they are hardly visually recognized as a striped pattern, and hence a uniform display screen is obtained (when colors having high luminosity factors are collectively arranged, there is a case where bright sub-pixel portions and dark sub-pixel portions are visually recognized as a striped pattern).

### Embodiment 2-2

In Embodiment 2-2, the values of Csd1 and Csd2 can be more reduced than the values of Csd1 and Csd2 in Embodiment 2-1 (for example, in the case of Fig. 5 and Fig. 6, the length of the signal lines 323p and 323q or the length of the signal lines 423p and 423q for one sub-pixel in Embodiment 2-2 is about a half of the length of the signal lines 223p and 223q for one sub-pixel in Embodiment 2-1, and hence each of the values of Csd1 and Csd2 can be reduced to about a half of each of the values of Csd1 and Csd2 in Embodiment 2-1). Further, the effects obtained by mixedly arranging colors having high luminosity factors and colors having low luminosity factors are the same as the effects of Embodiment 2-1. Further, a multilayer PS can be arranged in the portion where no sub-pixel electrode is arranged, and hence a liquid crystal display device with high yield can be obtained at low cost.

### Embodiment 3

Embodiment 3 relates to a form in which sub-pixels are arranged in a two-by-two matrix shape in an MVA mode liquid crystal display panel.

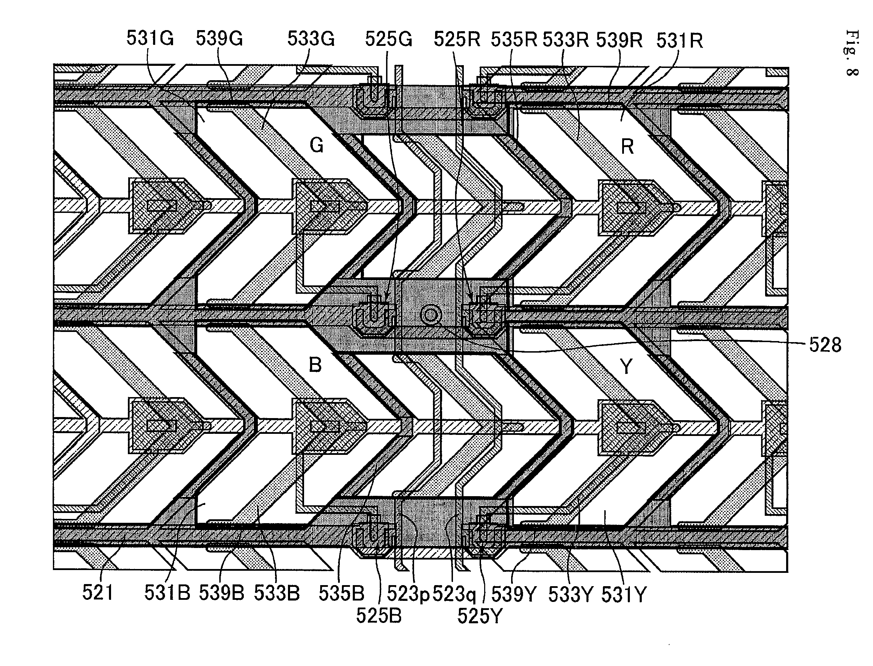

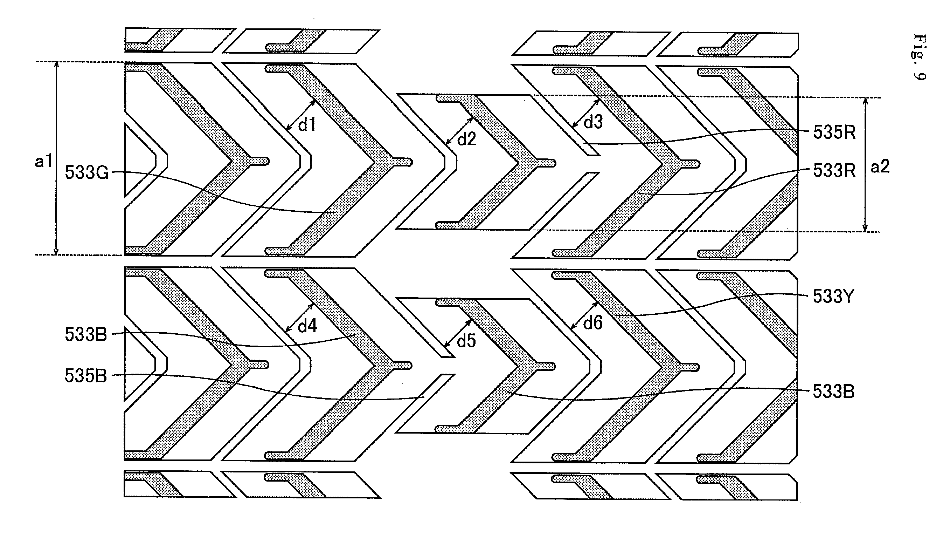

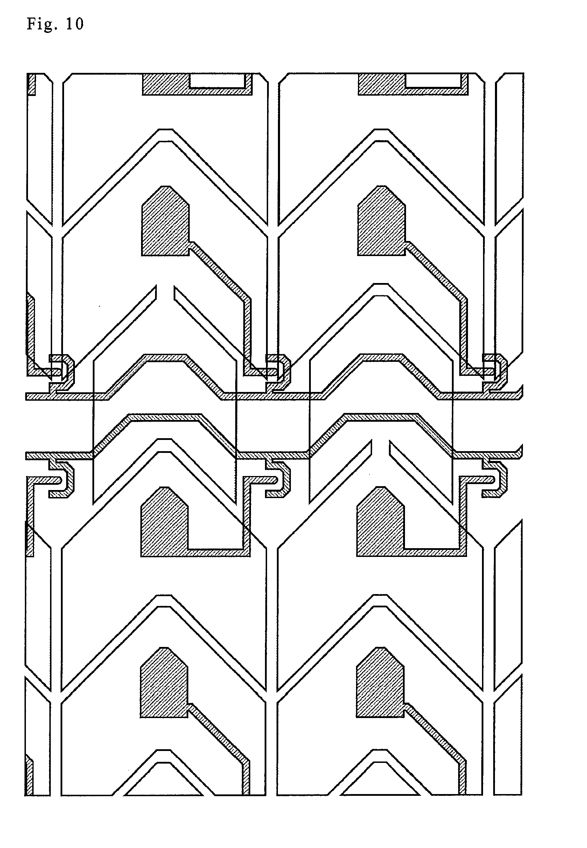

Fig. 8 is a schematic plan view showing a liquid crystal display panel of Embodiment 3. Fig. 9 is a view showing only domain division means provided in the sub-pixel electrode of the sub-pixel and in the common electrode in Fig. 8. Fig. 10 is a view showing only the sub-pixel electrode of the sub-pixel and the signal line in Fig. 8.

Scanning lines 521 and signal lines (data lines) 523p and 523q are arranged in a grid shape on the main surface of a glass substrate. In a plurality of pixel regions, a sub-pixel electrode 531R is arranged in the red (R) pixel region, a sub-pixel electrode 531G is arranged in the green (G) pixel region, a sub-pixel electrode 531B is arranged in the blue (B) pixel region, and a sub-pixel electrode 531Y is arranged in the yellow (Y) pixel region.

The area of the sub-pixel electrode is changed for each color. As a result, the areas of effective aperture portions 539R, 539G, 539B and 539Y are different for each color. Here, according to the difference in the luminosity factor, and the like, between the colors, the area of the effective aperture portion is made different between the color having the comparatively high luminosity factor and the color having the comparatively low luminosity factor. Usually, the area of the effective aperture portion for the color having the comparatively high luminosity factor is made small, and the area of the effective aperture portion for the color having the comparatively low luminosity factor is made large.
Further, in Embodiment 3, each of the plurality of sub-pixels RGBY of the display panel has a polygonal shape.

In Embodiment 3, as shown in Fig. 8, two signal lines of the signal line 523p (signal line for driving the sub-pixels GB) and the signal line 523q (signal line for driving the sub-pixels RY) are arranged so as to respectively overlap with the sub-pixels R and B having the larger area, and these two signal lines do not overlap with the sub-pixels G and Y having the smaller area. Further, in Embodiment 3, the length of the portion, at which each of the signal lines 523p and 523q overlaps with the sub-pixel electrode of the sub-pixel, is shorter than the length of the longest portion of the sub-pixel electrode of the sub-pixel. In other words, the signal lines 523p and 523q are made to pass through the region in which the sub-pixel electrode is not arranged, and/or are made to pass through the rectangular light shielding region. Thereby, the value of Csd in each of the sub-pixels RB can be reduced, and hence the effect of preventing unevenness of luminance can be sufficiently exhibited. Even with such form, the value of Csd in the sub-pixel can be suitably reduced.

The opposed substrate is configured such that a red (R) CF layer, a green (G) CF layer, a blue (B) CF layer, and a yellow (Y) CF layer are arranged on the main surface of a glass substrate in correspondence with each of the pixel regions, and the respective CF layers are partitioned by a light shielding portion (BM) referred to as a black matrix. Further, the BM is also arranged in the region in which the sub-pixel electrode is not arranged in Fig. 8 (portions 539G and 539Y surrounded by thick lines represent BM aperture portions of the sub-pixels having the smaller area, and portions 539R and 539B surrounded by thick lines represent BM aperture portions of the sub-pixels having the larger area). Further, as shown in Fig. 8, TFTs 525G, 525R, 525B and 525Y of the sub-pixels (G, R, B, Y) can be arranged under these BMs. Further a photo spacer 528 is also arranged.

Further, ribs 533Y, 533R, 533G and 533B which are alignment regulation means are formed in the opposed substrate.
The display panel is configured such that a plurality of sub-pixels YRGB are respectively configured by sub-pixel electrodes 531Y, 531R, 531G and 531B respectively having ribs 533Y, 533R, 533G and 533B. In the plan view of the pixels in the display panel, distances d1, d3, d4, d6 between each of the ribs 533Y, 533R, 533G, 533B and each of the edges of the sub-pixel electrodes 531Y, 531R, 531G, 531B, and distances d2, d5 between each of the ribs 533R and 533B, and each of slits 535R and 535B are all substantially the same.

In Fig. 9, the longitudinal length a2 of the projecting portion in the red (R) pixel and the blue (B) pixel is about 0.7 times the longitudinal length a1 in the red (R) pixel and the blue (B) pixel (the length of the longest portion of the sub-pixel electrode).
The other forms of Embodiment 3 described above are the same as the forms of Embodiment 1, and in Embodiment 3, the same effects as those of Embodiment 1 can be exhibited on the basis of the same forms.

The aforementioned modes of respective embodiments may be employed in appropriate combination as long as the combination is not beyond the spirit of the present invention.

The present application claims priority to Patent Application No. 2010-146826 filed in Japan on June 28, 2010 under the Paris Convention and provisions of national law in a designated State, the entire contents of which are hereby incorporated by reference.

### REFERENCE SIGNS LIST

11R, 11G, 11B, 11Y, 531R, 531G, 531B, 531Y: Sub-pixel electrode
23p, 23q, 123p, 123q, 223p, 223q, 323p, 323q, 423p, 423q, 523p, 523q: Signal line
27, 127: Unit pixel
521: Scanning line
525R, 525G, 525B, 525Y: TFT
528: Photo spacer
533R, 533G, 533B, 533Y: Rib
535R, 535B: Slit
539R, 539G, 539B, and 539Y: Effective aperture portion

## Claims

1. A display panel including a pair of substrates, a display element sandwiched between the pair of substrates, and pixels each formed by sub-pixels of four or more colors, wherein:
one of the pair of substrates includes scanning lines, signal lines, and sub-pixel electrodes; and
an area of at least one of the sub-pixels of four or more colors is different from the area of the other sub-pixels, and the sub-pixel having the larger area overlaps with a plurality of the signal lines in plan view of the main surface of the display panel.

2. The display panel according to claim 1, wherein the signal lines include a signal line used for driving the sub-pixel having the smaller area.

3. The display panel according to one of claim 1 and claim 2, wherein, in plan view of the main surface of the display panel, the main line of the signal lines does not overlap with the sub-pixel having the smaller area.

4. The display panel according to any one of claim 1 to claim 3, wherein:
the one of the pair of substrates includes switching elements and storage capacitance wirings;
the other of the pair of substrates includes a common electrode;
the sub-pixel electrodes are arranged in correspondence with one sub-pixel; and
at least one of the size of the switching element and the value of storage capacitance of the sub-pixel having the larger area is larger than at least one of the size of the switching element and the value of storage capacitance of the sub-pixel having the smaller area.

5. A display panel including a pair of substrates, a display element sandwiched between the pair of substrates, and pixels each formed by sub-pixels of four or more colors, wherein:
one of the pair of substrates includes scanning lines, signal lines, and sub-pixel electrodes; and
at least one of the sub-pixels of four or more colors has different brightness, and the sub-pixel having lower brightness overlaps with a plurality of the signal lines in plan view of the main surface of the display panel.

6. The display panel according to claim 5, wherein the signal lines include a signal line used for driving the sub-pixel having higher brightness.

7. The display panel according to one of claim 5 and claim 6, wherein, in plan view of the main surface of the display panel, the sub-pixel having higher brightness does not overlap with the main line of the signal lines.

8. The display panel according to any one of claim 1 to claim 7, wherein the plurality of signal lines are two signal lines.

9. The display panel according to claim 8, wherein the polarities of signals respectively applied to the two signal lines are reverse to each other.

10. The display panel according to claim 9, wherein, in the display panel, the polarity of the potential of the sub-pixel electrode for display of each color is reversed every natural number multiple of the number of sub-pixels included in one pixel in the same row direction.

11. The display panel according to any one of claim 1 to claim 10, wherein, in the sub-pixel including the sub-pixel electrode overlapping with the plurality of signal lines, the overlapping length between the plurality of signal lines and the sub-pixel electrode is shorter than the length of the longest portion of the sub-pixel electrode.

12. The display panel according to any one of claim 1 to claim 11, wherein the display panel is a liquid crystal display panel using a liquid crystal layer as the display element.

13. A display device comprising the display panel according to any one of claim 1 to claim 12.
